# EUROPEAN PATENT APPLICATION

(11) **EP 3 989 307 A1**
(43) Date of publication of application: **27.04.2022**
(21) Application number: 19934065.4
(22) Date of filing: 24.07.2019
(51) Int. Cl.: H01M 2/10, H01M 2/20

(54) **POWER BATTERY PACK AND VEHICLE**

(30) Priority: 21.06.2019 CN 201910544995
(71) Applicant: BYD Company Limited, Shenzhen, Guangdong 518118 (CN)
(72) Inventor: WANG, Longxing, Shenzhen, Guangdong 518118 (CN); WANG, Xiaolong, Shenzhen, Guangdong 518118 (CN); ZHENG, Weixin, Shenzhen, Guangdong 518118 (CN)
(74) Representative: Hoffmann Eitle
(86) International application number: PCT/CN2019/097435
(87) International publication number: WO 2020/252846

(57) **Abstract**

A power battery pack and a vehicle are provided. The power battery pack includes: a tray and an upper cover, where the tray includes a side frame and a bottom plate, and the upper cover and the bottom plate are respectively connected to upper and lower ends of the side frame to define a battery accommodating cavity; and a plurality of cells, where the plurality of cells are mounted in the battery accommodating cavity, one surface of each of the cells and the upper cover are bonded by a structural adhesive, and the other opposite surface of the cell and the bottom plate are bonded by a thermally conductive structural adhesive.

## Description

### CROSS-REFERENCE TO RELATED APPLICATIONS

This application claims to the priority of Chinese Patent No "201910544995.0" filed by the BYD Co., Ltd. on June 21, 2019 and entitled "POWER BATTERY PACK AND VEHICLE", which is incorporated herein by reference in its entirety.

### FIELD

This application belongs to the field of power battery manufacturing technologies, and specifically, to a power battery pack and a vehicle with the power battery pack.

### BACKGROUND

In the related art, cells are first assembled into a module, and are fixed by a module frame. Therefore, mounting space utilization of a power battery pack is low, and a quantity of the cells and the total capacity of the power battery pack are reduced, affecting the battery life.

### SUMMARY

This application adopts the following technical solutions:

In view of the foregoing problems, this application provides a power battery pack, including: a tray and an upper cover, where the tray includes a side frame and a bottom plate, and the upper cover and the bottom plate are respectively connected to upper and lower ends of the side frame to define a battery accommodating cavity; and a plurality of cells, where the plurality of cells are mounted in the battery accommodating cavity, one surface of each of the cells and the upper cover are bonded by a structural adhesive, and the other opposite surface of the cell and the bottom plate are bonded by a thermally conductive structural adhesive.

The power battery pack in this application reduces the use of a module frame, improves space utilization, reduces parts of the battery pack, saves a process procedure, improves assembly efficiency, and reduces manufacturing costs while ensuring sufficient structural strength.

This application further provides a vehicle, including the foregoing power battery pack.

Compared with the related art, the vehicle has same advantages as the foregoing power battery pack, and details are not described herein again.

Additional aspects and advantages of this application are partially provided in the following description, and some of which will become apparent in the following description or be learned from the practice of this application.

### BRIEF DESCRIPTION OF THE DRAWINGS

The foregoing and/or additional aspects and advantages of this application will become apparent and comprehensible in the description of the embodiments made with reference to the following accompanying drawings.
FIG. 1 is a top view of a power battery pack according to an embodiment of this application;
FIG. 2 is a cross-sectional view along A-A in FIG. 1;
FIG. 3 is a partially enlarged view of a position B in FIG. 2;
FIG. 4 is an exploded view of a power battery pack according to an embodiment of this application;
FIG. 5 is a schematic diagram of an arrangement structure of cells in a power battery pack according to an embodiment of this application;
FIG. 6 is a schematic structural diagram of cells in a power battery pack arranged on a tray according to an embodiment of this application; and
FIG. 7 is a schematic structural diagram of a vehicle according to an embodiment of this application.

Reference numerals:
vehicle 1000, power battery pack 100, tray 110, side frame 111, bottom plate 112, isolation cavity 113, upper cover 120, cell 150, thermally conductive structural adhesive 160, structural adhesive 161, and end plate 180.

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used merely for explaining this application, and should not be construed as a limitation on this application.

Unless otherwise specified, in this application, a front-rear direction is a longitudinal direction of a vehicle 1000, that is, an X direction; a left-right direction is a lateral direction of the vehicle 1000, that is, a Y direction; and an up-down direction is a vertical direction of the vehicle 1000, that is, a Z direction.

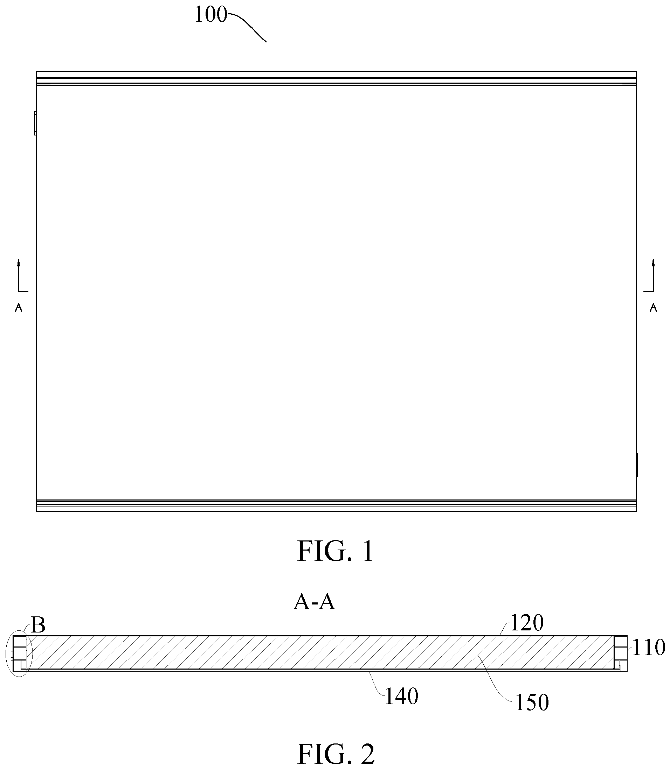

A power battery pack 100 according to an embodiment of this application is described below with reference to FIG. 1 to FIG. 4.

In some embodiments, as shown in FIG. 1 to FIG. 4, a battery pack housing includes a tray 110, an upper cover 120, and a plurality of cells 150.

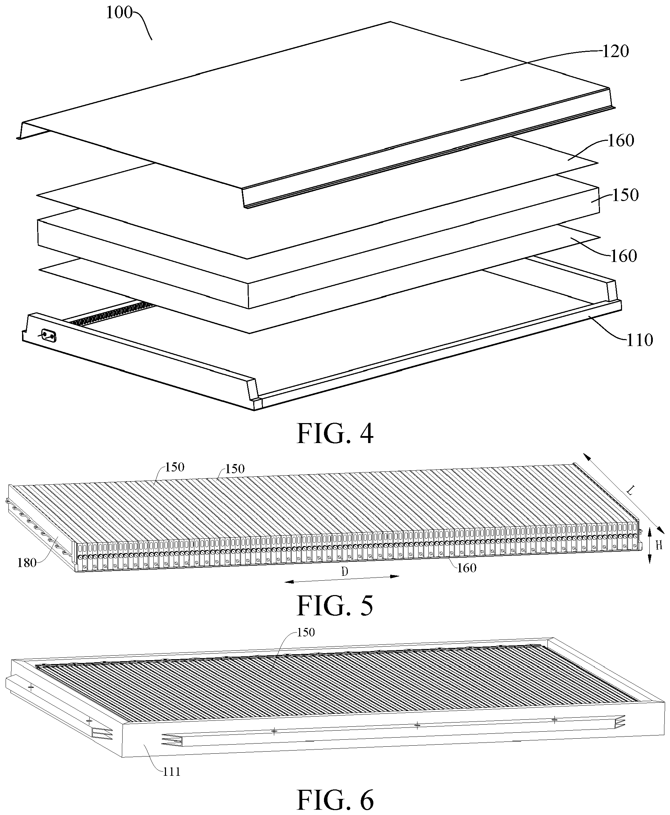

As shown in FIG. 2 and FIG. 4, the tray 110 includes a side frame 111 and a bottom plate 112. In an actual implementation, the side frame 111 is a rectangular frame, and the bottom plate 112 and a bottom surface of the side frame 111 can be mutually connected through soldering for use as a load bearing structure of the entire pack. In addition, the sealing performance of the entire pack is ensured, and the bottom plate 112 has heat spreading performance, thereby facilitating the heat exchange between the inside of a power battery pack body and the outside by a heat exchange plate.

The upper cover 120 and the bottom plate 112 are respectively connected to upper and lower ends of the side frame 111 to define a battery accommodating cavity, and the plurality of cells 150 are mounted in the battery accommodating cavity.

The upper cover 120 is connected to the upper end of the side frame 111, and the upper cover 120 and the side frame 111 may be connected to each other by at least one of a threaded connection member and an adhesive. In an actual implementation, an adhesive can be sandwiched between the upper end of the side frame 111 and a lower surface of the upper cover 120 to implement sealing and preliminary connection, and at least one threaded connection member can also be disposed on an outer ring of the adhesive to further strengthen the connection between the tray 110 and the upper cover 120.

One surface of the cell 150 and the upper cover 120 are bonded by a structural adhesive 161, and the other opposite surface of the cell 150 and the bottom plate 112 are bonded by a thermally conductive structural adhesive 160.

According to the power battery pack 100 provided in this application, the plurality of cells 150 are directly mounted in the battery accommodating cavity without being assembled into a module first, so that the use of a module frame is reduced, a mounting space of the cells 150 in a power battery pack housing is increased, and a quantity of the cells 150 mounted in the battery accommodating cavity is increased, thereby improving the total capacity and battery life of the power battery pack 100.

In addition, in the related art, the cells need to be first assembled into the module, and the module is always in irregular shape and cannot tightly arrange in the power battery pack housing. However, in the solutions of this application, the cells 150 are directly mounted in an accommodating space defined by the tray 110 and the upper cover 120, so that the cells 150 may tightly arrange in the battery accommodating cavity, thereby further increasing the mounting space of the cells 150 in the battery accommodating cavity and the quantity of the cells 150 in the entire power battery pack.

In addition, the use of the module frame is reduced, a quantity of elements and assembly procedures are reduced, and costs are further reduced. One surface of the cell 150 and the upper cover 120 are bonded by the structural adhesive 161, and the other opposite surface of the cell 150 and the bottom plate 112 are bonded by the thermally conductive structural adhesive 160. In this case, the fixing of the cells in the battery accommodating cavity is strengthened, and the strength of the entire power battery pack is improved. In addition, because the other opposite surface of the cell 150 and the bottom plate 112 are bonded by the thermally conductive structural adhesive, the heat of the battery may further be transferred to the bottom plate through the thermally conductive structural adhesive and be dissipated through the bottom plate.

According to the power battery pack 100 provided in this application, as shown in FIG. 5, the cell 150 can be a rectangular battery of a cuboid structure and has a length L, a thickness D, and a height H between the length and the thickness, and the plurality of cells 150 are arranged along a thickness direction of the cells. The cell 150 has two opposite large surfaces and two opposite narrow surfaces. A long side of the large surface is the length of the cell 150, and a short side is the height of the cell 150. A long side of the narrow surface is the length of the cell 150, and a short side is the thickness of the cell 150. Two adjacent cells 150 are arranged in the battery accommodating cavity with large surfaces facing each other. As shown in FIG. 6, an end plate 180 may be mounted on an outer side of two outermost cells 150 along the thickness direction of the cell 150, and the cell 150 may be connected to the tray 110 by the end plate 180.

According to an embodiment of this application, one narrow surface of the cell 150 and the bottom plate 112 are bonded by the thermally conductive structural adhesive 160, and the other narrow surface of the cell 150 and the upper cover 120 are bonded by the structural adhesive 161.

In this application, the upper cover 120 and the bottom plate 112 are both made of a metal.

In one aspect, the bottom plate 112 and the upper cover 120 made of a metal can provide protection for the inner cells 150. In another aspect, the battery accommodating cavity can implement heat dissipation. The bottom plate 112 and the upper cover 120 may be made of a metal with high thermal conductivity, including, but not limited to, aluminum, copper, and an alloy thereof.

In an actual implementation, the bottom plate 112 and the upper cover 120 may be made of an aluminum alloy material with adequate heat conduction performance and a low density.

The structural adhesive 161 is disposed between one surface of the cell 150 and the upper cover 120, and the thermally conductive structural adhesive 160 is disposed between the other opposite lower surface of the cell 150 and the bottom plate 112. In other words, one upper surface of the cell 150 is bonded to the upper cover 120 by the structural adhesive 161, and the other opposite lower surface of the cell 150 is bonded to the bottom plate 112 by the thermally conductive structural adhesive 160. In this case, upper and lower ends of two opposite surfaces of the cell 150 are both bonded to the battery pack housing, thereby strengthening the fixing of the cells 150, so that the cells 150 in the power battery pack 100 are fixed and stable, and the strength of the entire power battery pack is improved.

According to another aspect, one of the surfaces of the cell 150 is bonded to the bottom plate by the thermally conductive structural adhesive 160. The thermally conductive structural adhesive 160 can prevent the cell 150 from being electrically conducted to the tray 110, increase a contact area between the cell 150 and the tray 110, and transfer the heat of the battery to the bottom plate, so that the heat is dissipated through the bottom plate, thereby implementing heat dissipation.

In an actual implementation, a thermally conductive insulating adhesive may be a thermally conductive silicone which has better insulation and thermal conductivity performance, and can transfer heat of the cell 150 to the bottom plate 112 in time. The structural adhesive may be formed by adding an inorganic thermally conductive filler such as an aluminum oxide to one of epoxy resin, polyurethane, modified silane, acrylic, and silicone rubber.

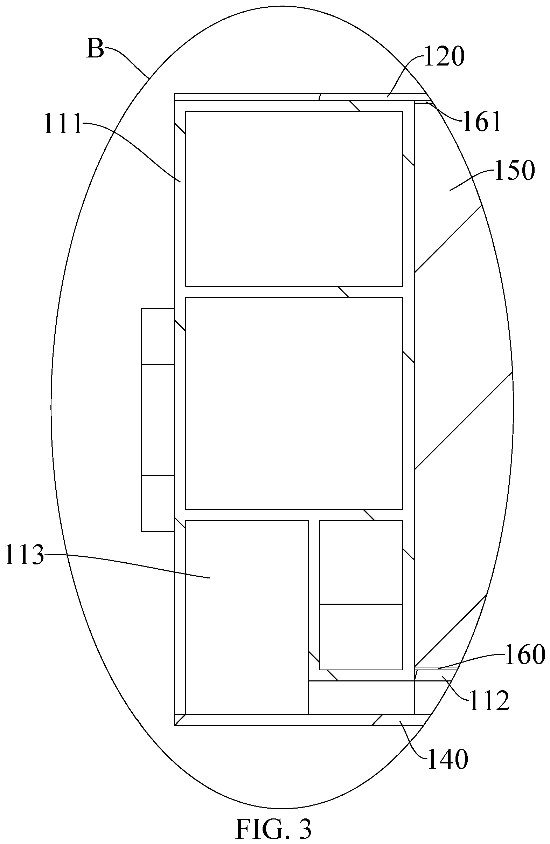

As shown in FIG. 2 and FIG. 3, the power battery pack 100 in this application may further include a bottom protection plate and a heat exchange plate.

The bottom protection plate is connected to the lower end of the side frame 111, and is spaced apart from the bottom plate 112 along a vertical direction, so that a cavity is formed between the bottom protection plate and the bottom plate 112, and the heat exchange plate is sandwiched between the bottom protection plate and the bottom plate 112.

The heat exchange plate may be provided with a heat exchange cavity, configured to circulate a heat exchange medium. In an actual implementation, the heat exchange plate may be a hollow plate body. The heat exchange plate is provided with a flow channel configured to circulate the heat exchange medium, and the heat exchange medium may be water.

It may be understood that, the bottom protection plate and the bottom plate 112 are equivalent to a sandwiched structure on a bottom surface of the tray 110. In this case, the heat exchange plate is disposed outside relative to the battery accommodating cavity, and the electrical safety of the power battery pack 100 can be effectively ensured in case that a cooling liquid suddenly leaks.

For example, in some embodiments, the power battery pack 100 is mounted on a chassis of the vehicle 1000. In a travel process of the vehicle 1000, if a bump on the road hits the power battery pack 100 and causes damage to the heat exchange plate, because the heat exchange plate and the battery accommodating cavity are separated by the bottom plate 112, the heat exchange medium is kept from flowing into the battery accommodating cavity to protect the cell 150 from impact.

According to another aspect, the bottom protection plate may protect the heat exchange plate to some extent, to prevent the heat exchange plate from damage.

As shown in FIG. 2, the side frame 111 may be provided with an isolation cavity 113. An end of the heat exchange plate extends into the isolation cavity 113. The heat exchange plate may include a plurality of heat exchange flow channels. A collecting pipe is disposed at the end of the heat exchange plate. The collecting pipe is disposed in the isolation cavity 113, and is in communication with an external water passage through a joint passing through the side frame 111.

In an embodiment of this application, the side frame 111 may be made of aluminum. The side frame is provided with a cavity structure, and a lower end of one of cavities is open. The collecting pipe may be mounted in the cavity through the open end below, and the cavity is sealed when bottoms of the bottom protection plate and the side frame 111 are connected, so that the isolation cavity 113 is formed.

It may be understood that, an inner circuit is kept from being impact with the presence of the structure of the isolation cavity 113 even if leakage occurs at the collecting pipe, and it is equivalent that the collecting pipe is mounted in the side frame 111 without affecting the battery density of the entire power battery pack 100.

For the power battery pack 100 provided in this application, the electrical safety of the power battery pack 100 can be effectively ensured by arranging the heat exchange plate between the bottom plate 112 and the bottom protection plate, and the bottom protection plate can protect the heat exchange plate to some extent. The external heat exchange plate does not occupy a space of the battery accommodating cavity, and the battery density of the entire power battery pack 100 is higher.

In some embodiments, a surface of the heat exchange plate and an outer surface of the bottom plate 112 are bonded by a thermally conductive structural adhesive 160. In this case, an actual effective contact area between the heat exchange plate and the bottom plate 112 is large, to increase heat transfer.

In some embodiments of this application, the heat exchange plate is provided with an energy-absorbing structure. The heat exchange plate is an integrated structure with the flow channels disposed inside, and an isolation rib between adjacent flow channels may form the energy-absorbing structure, so that the entire structure of the heat exchange plate 130 also implements an energy-absorbing effect.

In some embodiments, the bottom protection plate includes a mainboard body and a heat preservation layer. The heat preservation layer is disposed on a side of the mainboard body close to the heat exchange plate. The mainboard body may be a metal plate, including a structure such as a steel plate, and can implement anti-collision. The heat preservation layer may be a structure such as heat preservation cotton. In this case, the bottom protection plate has excellent mechanical strength while reducing the heat exchange between the pack body and the outside.

In some embodiments, the bottom protection plate includes a mainboard body and a buffer layer. The buffer layer is disposed on a side of the mainboard body close to the heat exchange plate. The mainboard body may be a metal plate, including a structure such as a steel plate, and can implement anti-collision. The buffer layer is configured to absorb external impact, and includes a structure such as a rubber layer. In this case, the bottom protection plate has excellent mechanical strength and mechanical impact resistance.

A power battery pack 100 includes a tray 110 and an upper cover 120, where the tray 110 includes a side frame 111 and a bottom plate 112, and the upper cover 120 and the bottom plate 112 are respectively connected to upper and lower ends of the side frame 111 to define a battery accommodating cavity; and a plurality of cells 150, where the plurality of cells 150 are mounted in the battery accommodating cavity, one surface of each of the cells 150 and the upper cover 120 are bonded by a structural adhesive 161, and the other opposite surface of the cell 150 and the bottom plate 112 are bonded by a thermally conductive structural adhesive 160.

In some embodiments, the cell 150 is a rectangular battery of a cuboid structure and has a length, a thickness, and a height between the length and the thickness, and the plurality of cells 150 are arranged along a thickness direction of the cells.

In some embodiments, the cell 150 has two opposite large surfaces and two opposite narrow surfaces; a long side of the large surface is the length of the cell 150, and a short side is the height of the cell 150; and a long side of the narrow surface is the length of the cell 150, and a short side is the thickness of the cell 150.

In some embodiments, two adjacent cells 150 are arranged in the battery accommodating cavity with large surfaces facing each other.

In some embodiments, one narrow surface of the cell 150 and the upper cover 120 are bonded by the structural adhesive 161; and the other narrow surface of the cell 150 and the bottom plate 112 are bonded by the thermally conductive structural adhesive 160.

In some embodiments, the upper cover 120 and the bottom plate 112 are both made of a metal.

In some embodiments, the power battery pack 100 further includes: a bottom protection plate, connected to the lower end of the side frame 111, and spaced apart from the bottom plate 112 along a vertical direction; and a heat exchange plate, sandwiched between the bottom protection plate and the bottom plate 112.

In some embodiments, a surface of the heat exchange plate and an outer surface of the bottom plate 112 are bonded by a thermally conductive structural adhesive 160.

In some embodiments, the heat exchange plate is provided with a heat exchange cavity, configured to circulate a heat exchange medium.

In some embodiments, the heat exchange plate is provided with an energy-absorbing structure.

In some embodiments, the bottom protection plate includes a mainboard body and a heat preservation layer, and the heat preservation layer is disposed on a side of the mainboard body close to the heat exchange plate.

In some embodiments, the bottom protection plate includes a mainboard body and a buffer layer, and the buffer layer is disposed on a side of the mainboard body close to the heat exchange plate.

This application further discloses a vehicle 1000.

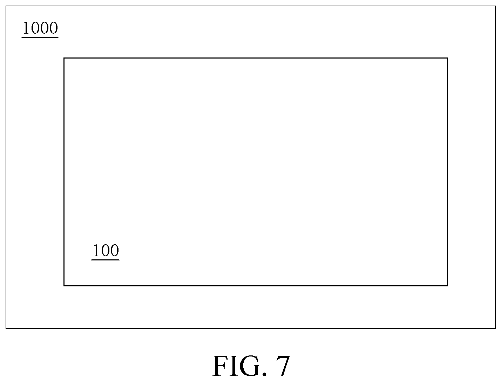

As shown in FIG. 7, the vehicle 1000 according to the embodiments of this application includes the power battery pack 100 in any one of the foregoing embodiments.

The vehicle 1000 according to the embodiments of this application may be an electric vehicle 1000, including an electric passenger vehicle, an electric bus, or the like.

In some embodiments, the power battery pack 100 may be mounted on the chassis of the vehicle 1000.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of this application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of this application have been shown and described, a person of ordinary skill in the art should understand that various changes, modifications, replacements and variations may be made to the embodiments without departing from the principles and spirit of this application, and the scope of this application is as defined by the appended claims and their equivalents.

## Claims

1. A power battery pack (100), comprising:
a tray (110) and an upper cover (120), wherein the tray (110) comprises a side frame (111) and a bottom plate (112), and the upper cover (120) and the bottom plate (112) are respectively connected to upper and lower ends of the side frame (111) to define a battery accommodating cavity; and
a plurality of cells (150), wherein the plurality of cells (150) are mounted in the battery accommodating cavity, one surface of each of the cells (150) and the upper cover (120) are bonded by a structural adhesive (161), and the other opposite surface of the cell (150) and the bottom plate (112) are bonded by a thermally conductive structural adhesive (160).

2. The power battery pack (100) according to claim 1, wherein each of the plurality of cells (150) is a rectangular battery of a cuboid structure and has a length, a thickness, and a height between the length and the thickness, and the plurality of cells (150) are arranged along a thickness direction of the cells.

3. The power battery pack (100) according to claim 2, wherein the cell (150) has two opposite large surfaces and two opposite narrow surfaces; a long side of the large surface is the length of the cell (150), and a short side is the height of the cell (150); and a long side of the narrow surface is the length of the cell (150), and a short side is the thickness of the cell (150).

4. The power battery pack (100) according to claim 3, wherein two adjacent cells (150) are arranged in the battery accommodating cavity with large surfaces facing each other.

5. The power battery pack (100) according to claim 3 or 4, wherein one narrow surface of the cell (150) and the upper cover (120) are bonded by the structural adhesive (161); and the other narrow surface of the cell (150) and the bottom plate (112) are bonded by the thermally conductive structural adhesive (160).

6. The power battery pack (100) according to any one of claims 1 to 5, wherein the upper cover (120) and the bottom plate (112) are both made of a metal.

7. The power battery pack (100) according to any one of claims 1 to 6, further comprising:
a bottom protection plate, connected to the lower end of the side frame (111), and spaced apart from the bottom plate (112) along a vertical direction; and
a heat exchange plate, sandwiched between the bottom protection plate and the bottom plate (112).

8. The power battery pack (100) according to claim 7, wherein a surface of the heat exchange plate and an outer surface of the bottom plate (112) are bonded by a thermally conductive structural adhesive (160).

9. The power battery pack (100) according to claim 7 or 8, wherein the heat exchange plate is provided with a heat exchange cavity configured to circulate a heat exchange medium.

10. The power battery pack (100) according to any one of claims 7 to 9, wherein the heat exchange plate is provided with an energy-absorbing structure.

11. The power battery pack (100) according to any one of claims 7 to 10, wherein the bottom protection plate comprises a mainboard body and a heat preservation layer, and the heat preservation layer is disposed on a side of the mainboard body close to the heat exchange plate.

12. The power battery pack (100) according to any one of claims 7 to 11, wherein the bottom protection plate comprises a mainboard body and a buffer layer, and the buffer layer is disposed on a side of the mainboard body close to the heat exchange plate.

13. A vehicle (1000), comprising the power battery pack (100) according to any one of claims 1 to 12.

14. The vehicle (1000) according to claim 13, wherein the power battery pack (100) is mounted on a chassis of the vehicle (1000).
